# EUROPÄISCHE PATENTSCHRIFT

(11) **EP 3 834 243 B1**
(45) Veröffentlichungstag und Bekanntmachung des Hinweises auf die Patenterteilung: **31.01.2024**
(21) Anmeldenummer: 19749588.0
(22) Anmeldetag: 08.07.2019
(51) Int. Cl.: H01M 8/0234, H01M 8/0239, H01M 8/0243, H01M 8/0245, H01M 4/86, H01M 4/88, H01M 8/1004

(54) **SCHICHTAUFBAU FÜR EINE BRENNSTOFFZELLE UND VERFAHREN ZUR HERSTELLUNG EINES SOLCHEN SCHICHTAUFBAUS**
LAYERED STRUCTURE FOR A FUEL CELL AND METHOD FOR PRODUCING A LAYERED STRUCTURE OF THIS TYPE
STRUCTURE EN COUCHES POUR UNE PILE À COMBUSTIBLE ET PROCÉDÉ POUR FABRIQUER UNE TELLE STRUCTURE EN COUCHES

(30) Priorität: 07.08.2018 DE 102018213148
(43) Veröffentlichungstag der Anmeldung: 16.06.2021
(73) Patentinhaber: AUDI AG, 85045 Ingolstadt (DE); VOLKSWAGEN AG, 38440 Wolfsburg (DE)
(72) Erfinder: HÜBNER, Gerold, 38104 Braunschweig (DE); GRAF, Tanja, 38126 Braunschweig (DE); SCHLADT, Thomas, 38126 Braunschweig (DE)
(86) Internationale Anmeldenummer: PCT/EP2019/068221
(87) Internationale Veröffentlichungsnummer: WO 2020/030355

(56) Entgegenhaltungen:
- DE-A1-102007 056 120
- US-A1- 2005 142 433
- US-A1- 2005 255 373
- US-A1- 2006 257 641
- US-A1- 2011 008 706

## Beschreibung

Die Erfindung betrifft einen Schichtaufbau für eine Brennstoffzelle mit einem auf Kohlenstoff basierenden katalysatorfreien Gasdiffusionslagensubstrat und mit einer mit dem Gasdiffusionslagensubstrat verbundenen auf Kohlenstoff basierenden mikroporösen Lage, die eine Mehrzahl von in einem ionenleitfähigen Polymerbindergemisch eingebettete Kohlenstoffträger oder Kohlenstofffasern umfasst. Weiterhin betrifft die Erfindung ein Verfahren zur Herstellung eines solchen Schichtaufbaus.

Schichtaufbauten der eingangs genannten Art bilden sogenannte Gasdiffusionselektroden, von denen jeweils eine auf den beiden Seiten der Membran einer Brennstoffzelle angeordnet ist. Die Brennstoffzellen werden genutzt, um mit einer elektrochemischen Reaktion zwischen einem Brennstoff, in der Regel Wasserstoff, und einem sauerstoffhaltiges Gas, in der Regel Luft, elektrische Energie bereitzustellen. Die Brennstoffzelle verfügt üblicherweise über eine Membranelektrodenanordnung, bei der auf der einen Seite der Membran die Anode und auf der anderen Seite die Kathode ausgebildet ist. Der Anode wird Wasserstoffgas zugeführt, während die Kathode mit Luft versorgt wird. Die Reaktanten werden über in Bipolarplatten ausgebildeten Kanäle in die Gasdiffusionslage geleitet, die diese im Wesentlichen großflächig verteilt, bevor sie in die angrenzende mikroporöse Lage treten, um an einer Katalysatorschicht anodenseitig in Protonen und Elektronen zergliedert zu werden (Oxidation) oder kathodenseitig unter Aufnahme von Elektronen zu Produktwasser gewandelt zu werden (Reduktion).

In der US 2006 / 0 257 641 A1 ist ein Elektrodensubstrat in Form einer Gasdiffussionslage beschrieben, die eine mehrteilig gestaltete Mikroporöse Lage aufweist, wovon ein erster Teil in die benachbarte Gasdiffusionslage eingedrungen/eingebettet ist und wovon ein zweiter Teil in die Gasdiffusionslage nicht eingedrungen ist. Die Gasdiffusionslage und die Mikroporöse Lage basieren auf Kohlenstoff. Die Mikroporöse Lage umfasst außerdem ein Polymerbindergemisch, das ausgewählt ist aus poly(perfluorosulfonic acid) (PFSA), poly(tetraflouroethylene) (PTFE) und fluorinated ethylene-propylene.

Die US 2005 / 0 255 373 A1 beschreibt eine Gasdiffusionselektrode, die elektrisch leitfähig ist und auf Kohlenstoffpapier oder auf Metallschaum basiert, um einen water removal-Pfad und einen gas diffusion-Pfad auszubilden. Hierbei wird auf das Ausgangsmaterial der Gasdiffusionselektrode eine fluorbasierte, wasserabweisende Beschichtung aufgebracht, womit sie auf ihrer der Membran zugewandten Seite eine erste Schicht mit hydrophoben Eigenschaften und auf ihrer der Membran abgewandten Seite eine zweite Schicht mit hydrophilen Eigenschaften aufweist. Auf diese Weise wird das an der Katalysatorschicht entstehende Produktwasser besser von der Brennstoffzelle abtransportiert.

In der US 2011 / 0 008 706 A1 wird eine Kathodengasdiffusionslage beschrieben, bei der in die Mikroporöse Lage Kohlenstoffpartikel aufweist, die in ein Fluoropolymer, z.B. in Form von Polytetraflourethylen (PTFA), eingebettet sind. Da sich das Fluoropolymer entsprechend lösen lässt, dringt dieses in die der Mikroporösen Lage benachbarte Katalysatorschicht und die Gasdiffusionsschicht ein.

Die US 2005 / 0 142 433 A1 beschreibt die Herstellung einer Membran-Elektroden-Anordnung (MEA), welcher jeweils Gasdiffusionslage und zugehörige Katalysatorschichten zugewiesen ist. Hierbei wird zur Monolagenbildung von Katalysatormetallen eine chemische Gasphasenabscheidung genutzt.

Die DE 10 2007 056 120 A1 beschreibt ein Verfahren zum Herstellen der Membran-Elektroden-Anordnung, bei der eine elektrisch leitfähige Schicht zwischen der Katalysatorlage und der Mikroporösen Lage eingebracht ist. Hierbei wird zunächst eine Gasdiffusionslage mit einer Mikroporösen Lage bereitgestellt, auf welche die elektrisch leitfähige Schicht aufgebracht wird, wobei die Mikroporöse Lage einen aus sulfonierten Polymer gebildeten Binder aufweist, und wobei die elektrisch leitfähige Schicht einen aus schwefelfreiem Polymer gebildeten Binder aufweist.

Die US 2006/0257641 A1 beschreibt ein Elektrodensubstrat für eine Brennstoffzelle, die eine Gasdiffusionslage und eine zweigeteilte mikroporöse Lage aufweist, wobei einer der beiden Teile der mikroporösen Lage in die Gasdiffusionslage eingebettet ist. Auf den anderen Teil der mikroporösen Lage ist eine Katalysatorschicht aufgebracht.

Die WO 03/058743 A2 beschreibt ebenfalls einen Schichtaufbau, der in einer Brennstoffzelle genutzt werden kann, bestehend aus einer aus Carbonfasern gebildeten Gasdiffusionslage, wobei die Carbonfasern mit einem fluorierten Polymer beschichtet sind. Auf diese Gasdiffusionslage ist eine mikroporöse Lage aufgebracht, welche in ein zweites, oder das gleiche, fluoriertes Polymer eingebettete Kohlenstoffpartikel umfasst. Diese Gestaltung dient dem Wassermanagement innerhalb der Brennstoffzelle.

Auch in der WO 2015/101772 A1 ist eine Gasdiffusionslage und eine darauf angebrachte mikroporöse Lage beschrieben, wobei die mikroporöse Lage mit Bereichen unterschiedlicher Porosität gestaltet ist. Alternativ kann die mikroporöse Lage dabei auch einerseits aus einem Material mit hydrophoben Eigenschaften und andererseits aus einem Material mit hydrophilen Eigenschaften zusammengesetzt sein.

In der DE 197 37 389 A1 ist eine Gasdiffusionselektrode für eine Brennstoffzelle beschrieben, die eine anisotrope Gasdiffusionsschicht und eine katalytische Schicht umfasst. Die Gasdiffusionsschicht besteht aus einer porösen Kohlenstoffmatrix, durch die Kohlenstoffteilchen und Polyethersulfon so verteilt werden, dass die Matrix in seitlicher Richtung zum Gasstrom homogen porös und in Richtung zum Gasstrom für Gase asymmetrisch porös ist. Auf die Gasdiffusionsschicht ist eine katalytische Schicht mit katalytischen Kohlenstoffteilchen und einem thermoplastischen Polymer aufgebracht. Die katalytische Schicht weist eine nur geringe Metallkatalysatorbeladung von zwischen 0,2 und 0,5 Milligramm pro Quadratzentimetern auf.

Bei aus dem Stand der Technik bekannten Gasdiffusionselektroden wird eine Lösung des Polymers der Membran nach der Beschichtung mit dem Katalysatormetall auf die mit dem Katalysatormetall ausgestattete mikroporöse Lage aufgebracht. Dabei besteht das Risiko, dass die Atome des Katalysatormetalls ungleichmäßig mit dem die Membran bildenden lonomer benetzt werden, so dass die lonomerlösung die im Kohlenstoff und/oder die im Bindepolymer der mikroporösen Lage ausgebildeten Poren verschließt. Ein Imprägnieren mit lonomer zeitlich nach dem Auftrag des Katalysatormetalls kann also zu Diffusionslimitierungen innerhalb der mikroporösen Lage führen. Würde demgegenüber das lonomer zeitlich vor dem Katalysatormetall auf die mikroporöse Lage aufgebracht werden, so ist damit, abhängig von der Aufbringungsmethode des Katalysators, die Gefahr verbunden, dass das lonomer bei der nachträglichen Abscheidung des Katalysatormetalls beschädigt wird und gegebenenfalls gänzlich seine protonenleitende Funktion verliert.

Es ist daher Aufgabe der vorliegenden Erfindung, einen Schichtaufbau der eingangs genannten Art derart weiterzubilden, dass die vorstehend erläuterten Nachteile beseitigt oder zumindest reduziert werden. Außerdem ist es Aufgabe der vorliegenden Erfindung, ein Verfahren zur Herstellung eines solchen Schichtaufbaus anzugeben.

Der den Schichtaufbau betreffende Teil der Aufgabe wird mit einem Schichtaufbau mit dem Merkmalsbestand des Anspruchs 1 gelöst. Vorteilhafte Ausgestaltungen mit zweckmäßigen Weiterbildungen dieses Schichtaufbaus sind in den abhängigen Ansprüchen angegeben.

Der Schichtaufbau zeichnet sich insbesondere dadurch aus, dass in der mirkroporösen Lage ein Anteil oder eine Konzentration des Bindepolymers an oder nahe einer dem Gasdiffusionslagensubstrat abgewandten Oberfläche der mikroporösen Lage kleiner gleich einem Anteil oder einer Konzentration des sulfonierten Polymers ist.

Mit einer derart ausgebildeten mikroporösen Lage bilden funktionelle Gruppen eine kovalente und daher stabilere Bindung mit dem in der mikroporösen Lage vorhandenen Kohlenstoff oder mit dem darin enthaltenen Bindepolymer aus.

Außerdem wird sinnvoll verhindert, dass poröse Bereiche der mikroporösen Lage verstopft werden, da nach dem Aufbringen der Katalysatorbeschichtung zeitlich nachgelagert keine Imprägnierung der mikroporösen Lage mit einer lonomerlösung mehr erforderlich ist. Somit werden weder die Poren in den Kohlenstoffträgern oder den Kohlenstofffasern noch die Poren des schwefelfreien Bindepolymers blockiert, die für den Reaktantenzufluss und für das Wassermanagement der Brennstoffzelle erforderlich sind.

Ferner wird, da auf die Imprägnierung mit einem lonomer verzichtet wird, ein geringeres Quellvermögen in Wasser bzw. verminderte Volumenausdehnung bei Feuchteschwankungen verzeichnet. Einer Schädigung des Ionomers bei einer nachträglichen Katalysatorbeschichtung wird zudem vorgebeugt. Letztlich wird auch die katalytisch aktive Oberfläche des Katalysatormetalls nicht durch eine zu dicke lonomerschicht blockiert, was zu einer Senkung der Reaktionsrate der Brennstoffzelle führen würde.

Als schwefelfreies Bindepolymer kommt beispielsweise Polytetrafluorethylen (PTFE) oder Ethylen-Tetrafluorethylen-Copolymer (ETFE) infrage. Als sulfoniertes Polymer kann beispielsweise perfluorierte Sulfonsäure (PFSA), ein sulfoniertes Hydrocarbonpolymer, sulfoniertes Polyetheretherketon (sPEEK), Polysulfon (z.B. sPSU), Polyethersulfon (PES) oder dergleichen, eingesetzt werden.

Es hat sich als vorteilhaft erwiesen, wenn das Bindepolymer und das sulfonierte Polymer im Volumen der mikroporösen Lage gleichmäßig verteilt sind.

Dadurch lässt sich eine optimierte ionische Anbindung des nachträglich mittels eines Atomlagenabscheideverfahrens (ALD = englisch für"atomic layer deposition") aufgebrachten Katalysatormetalls erzielen. Es ist dabei gleichzeitig aber gewährleistet, dass an oder nahe der Oberfläche der mikroporösen Lage, welche dem Gasdiffusionslagensubstrat abgewandt ist, noch ein begrenzter Anteil oder eine Restkonzentration des Ionomers vorhanden ist, welches essentiell für das Wassermanagement der Brennstoffzelle ist. Versuche haben gezeigt, dass sich Metallkatalysatoren auf dem schwefelfreien Bindepolymer nur schlecht abscheiden lassen, so dass an der Oberfläche der mikroporösen Lage ein genügend großer Anteil am sulfonierten Polymer vorhanden ist, welches das Abscheiden nicht, oder zumindest geringer als es das Bindepolymer tut, behindert.

Das Wassermanagement und die Abscheidbarkeit des Katalysatormetalls wird erfindungsgemäß dadurch begünstigt, dass sich in der mikroporösen Lage der Anteil des Bindepolymers in Richtung des Gasdiffusionslagensubstrats erhöht, und dass sich der Anteil des sulfonierten Polymers in Richtung des Gasdiffusionslagensubstrats verringert, insbesondere komplementär zur Erhöhung der Konzentration des Bindepolymers. Somit ist gewährleistet, dass auf der der Membran zugewandten Seite der mikroporösen Lage das Katalysatormetall erfolgreich mittels eines Atomlagenabscheideverfahrens abgeschieden werden kann, und zugleich der spätere Wassertransport der Brennstoffzelle aus der mikroporösen Lage hin zum Gasdiffusionslagensubstrat nicht behindert wird.

In diesem Zusammenhang hat es sich als günstig herausgestellt, wenn sich der Anteil des Bindepolymers in Richtung des Gasdiffusionslagensubstrat stufenweise erhöht. Somit kann die mikroporöse Lage schichtweise mit dem Polymerbindergemisch aufgebaut werden, wobei die Verteilung der Anteile des Bindepolymers und des sulfonierten Polymers schicht- oder stufenweise verändert wird.

Erfindungsgemäß ist jedoch vorgesehen, dass sich der Anteil des Bindepolymers in Richtung des Gasdiffusionslagensubstrats kontinuierlich erhöht und somit eine gradierte Verteilung, mithin ein Konzentrationsgradient vorliegt.

Eine entsprechende Verteilung des schwefelfreien Bindepolymers und des sulfonierten Polymers über die mikroporöse Lage hinweg lässt sich auch dadurch erzielen, dass die Kohlenstoffträger der mikroporösen Lage an einem dem Gasdiffusionslagensubstrat abgewandten ersten Volumenbereich erste Kohlenstoffpartikel und an einem dem Gasdiffusionslagensubstrat zugewandten zweiten Volumenbereich zweite Kohlenstoffpartikel umfassen, und dass die ersten und/oder die zweiten Kohlenstoffpartikel mit einer Beschichtung zur Funktionalisierung versehen sind. Diese Beschichtung kann beispielsweise ein sulfoniertes Polymer sein, so dass die Kohlenstoffpartikel eine protonenleitenden Funktion erhalten. Diese protonenleitenden, funktionalisierten Kohlenstoffpartikel sind dabei vorzugsweise dem ersten Volumenbereich zugeordnet, welcher dem Gasdiffusionslagensubstrat abgewandt ist. Alternativ oder ergänzend können die zweiten Kohlenstoffpartikel mit einem Silikat, mit Titandioxid (TiO₂) oder mit Siliziumsdioxid (SiO₂) beschichtet werden, was deren Benetzbarkeit mit Wasser erhöht. Die hydrophilen, funktionalisierten Kohlenstoffpartikel tragen zum Wassermanagement innerhalb der mikroporösen Lage bei. Deshalb werden die hydrophilen zweiten Kohlenstoffpartikel vorzugsweise im zweiten Volumenbereich der mikroporösen Lage angeordnet, der dem Gasdiffusionslagensubstrat zugewandt ist oder sogar unmittelbar an dieses angrenzt. Wasser wird so mittels der hydrophil funktionalisierten Kohlenstoffpartikel an das gegenüber der mikroporösen Lage mit größeren Poren ausgestattete Gasdiffusionslagensubstrat geleitet.

Es besteht außerdem die Möglichkeit, das Bindepolymer zur Funktionalisierung um protonenleitende Gruppen zu ergänzen. Hierzu kann beispielsweise Vinylphosphonsäure - vorzugsweise unter Plasmabildung - auf dem Bindepolymer abgeschieden werden. Alternativ oder ergänzend können diese Substanzen auch auf dem Kohlenstoff unmittelbar abgeschieden werden. Dabei ist zu gewährleisten, dass etwaige poröse Strukturen nicht vollständig verschlossen werden, was sich ungünstig auf das Wassermanagement auswirken könnte. Zudem sollte die Zufuhr der Reaktanten an die Katalysatorbeschichtung oder an die Katalysatorpartikel nicht blockiert werden.

Um den Schichtaufbau zu einer die Reaktion der Brennstoffzelle begünstigenden Gasdiffusionslagenelektrode weiterzubilden, hat es sich als sinnvoll erwiesen, wenn von der dem Gasdiffusionslagensubstrat abgewandten Seite der mikroporösen Lage, insbesondere auf deren Kohlenstofffasern oder Kohlenstoffträgern, eine Katalysatorbeschichtung aufgebracht oder in die mikroporöse Lage eingebracht ist. Hierbei kommen Katalysatormetalle infrage, die ausgewählt sind aus einer Gruppe umfassend Edelmetalle wie Platin, Ruthenium, Palladium oder dergleichen. Auch Legierungen mit diesen Edelmetallen können als Katalysatorbeschichtung Verwendung finden. Es hat sich als vorteilhaft herausgestellt, wenn die Katalysatorbeschichtung im Atomlagenabscheideverfahren aufgebracht wird, da dann nur sehr dünne Schichten unter geringem Materialeinsatz gebildet werden können. Die katalytisch aktiven Edelmetalle sind sehr teuer, so dass die Atomlagenabscheidung ein Verfahren ist, bei dem sich die Kosten für die Herstellung des Schichtaufbaus sehr gering halten lassen.

Der das Verfahren betreffende Teil der Aufgabe wird durch ein Verfahren mit dem Merkmalsbestand des Anspruchs 7 gelöst. Vorteilhafte Ausgestaltungen mit zweckmäßigen Weiterbildungen des Verfahrens sind in den abhängigen Ansprüchen angegeben.

Das Verfahren zur Herstellung eines Schichtaufbaus für eine Brennstoffzelle umfasst insbesondere die Schritte:
- Bereitstellen eines auf Kohlenstoff (bspw. Fasern, Fäden, Papiere oder dergleichen) basierenden katalysatorfreien Gasdiffusionslagensubstrats,
- Einbetten einer Mehrzahl von Kohlenstoffträgern oder Kohlenstofffasern in einem ionenleitfähigen Polymerbindergemisch umfassend ein schwefelfreies Bindepolymer und ein sulfoniertes Polymer,
- Bilden einer mikroporösen Lage, bei der ein Anteil des Bindepolymers an oder nahe einer dem Gasdiffusionslagensubstrat abgewandten Oberfläche der mikroporösen Lage kleiner gleich einem Anteil des sulfonierten
   Polymers ist, und
- Aufbringen eines Katalysatormetalls oder einer Katalysatormetalllegierung auf die dem Gasdiffusionslagensubstrat abgewandte Oberfläche oder von der dem Gasdiffusionslagensubstrat abgewandten Seite der mikroporösen Lage.

Durch das vorstehend genannte Verfahren wird also eine Gasdiffusionselektrode gebildet, bei der das Katalysatormetall auf der dem Gasdiffusionslagensubstrat abgewandten Seite der mikroporösen Lage aufgebracht ist. Aufgrund des geringeren Anteils des Bindepolymers auf dieser Seite der mikroporösen Lage lässt sich das Katalysatormetall betriebssicher Abscheiden und wird nicht durch einen zu hohen Anteil des schwefelfreien Bindepolymers am Abscheiden gehindert. Dennoch ist an der dem Gasdiffusionslagensubstrat abgewandten Seite der mikroporösen Lage ein Anteil des schwefelfreien Bindepolymers vorhanden, welches zum Wassermanagement der Brennstoffzelle beiträgt.

Eine gleichmäßige Beschichtung mit dem Katalysatormetall lässt sich vorteilhafterweise durch ein Atomlagenabscheideverfahren erreichen, wobei das Aufbringen des Katalysatormetalls durch einen Zyklus oder durch mehrere Zyklen erfolgt, die die folgenden Schritten umfassen:
- Aufbringen einer einer Submonolage entsprechenden Menge von Atomen oder von Molekülverbindungen umfassend das Katalysatormetall auf die ein Substrat bildende mikroporöse Lage,
- Aufbringen eines Prekursors oder eines Passivierungsgases auf die mikroporöse Lage zur Passivierung der Atome oder der Molekülverbindungen des Katalysatormetalls, und
- Aufbringen einer weiteren einer Submonolage entsprechenden Menge an Atomen oder Molekülverbindungen umfassend das Katalysatormetall.

Versuche haben gezeigt, dass Katalysatormetalle, insbesondere Platin, einen Hang dazu haben, beim Abscheiden zu einem Inselwachstum zu tendieren. Das bedeutet, dass ein Platinatom lieber auf einem oder mehreren anderen Platinatomen "sitzt" und somit das Substrat nur dann vollständig bedeckt wird, wenn eine hinreichend große Menge des Katalysatormetalls eingesetzt wird. Um diesem Problem zu begegnen wird ein Prekursor oder auch ein Passivierungsgas wie Kohlenstoffmonoxid (CO) eingesetzt, welches die bereits abgeschiedenen Platinatome "besetzt", so dass nachfolgende Platinatome im Wesentlichen nur auf freien Plätzen des Substrats abgeschieden werden und so eine homogenere Katalysatorbeschichtung mit dem Katalysatormetall entsteht.

Beim ersten Zyklusschritt kann beispielsweise ebenfalls ein Prekursor einsetzt werden, welcher bereits Platin umfasst, wie beispielsweise (Methylcyclopentadienyl)trimethyl-Platin. In einem Zykluszwischenschritt wird dann ein Prekursor (z.B. Sauerstoff oder Plasma aus Sauerstoff) zur Oxidation der auf der mikroporösen Lage abgeschiedenen Molekülverbindungen, ggfs. unter Erhitzung des Substrats (z.B. auf über 220 Grad Celsius) aufgebracht. Dabei bleibt das Katalysatormetall am Substrat haften und wird "freigelegt". Anschließend erfolgt der zweite Zyklusschritt der Passivierung mit einem Prekursor oder einem Passivierungsgas (z.B. CO), bevor wiederum der das Platin umfassende Prekursor auf das Substrat aufgebracht wird.

Um jedenfalls letztlich weitere unerwünschte Moleküle von der mikroporösen Lage zu desorbieren, hat es sich als vorteilhaft erwiesen, wenn am Ende jedes Zyklus die mikroporöse Lage mit einem Trägergas gespült wird. Als Trägergas kommt beispielsweise Sauerstoff infrage.

Es hat sich als vorteilhaft für das Abscheiden des Katalysators erwiesen, wenn die Kohlenstoffträger der mikroporösen Lage als Kohlenstoffpartikel gebildet sind, die zeitlich vor dem Aufbringen des Katalysatormetalls funktionalisiert werden. Alternativ oder ergänzend besteht auch die Möglichkeit, dass eines oder mehrere der Polymere des Polymerbindergemisches zeitlich vor dem Aufbringen des Katalysatormetalls funktionalisiert werden. Vorzugsweise wird die Beschichtung zur Funktionalisierung erst nachträglich - d.h. nach der Bildung der mikroporösen Lage - auf die mikroporöse Lage aufgebracht bzw. in diese von der dem Gasdiffusionslagensubstrat abgewandten Seite eingebracht.

Um eine Brennstoffzelle auf eine besonders einfache Art und Weise herstellen zu können, hat es sich als vorteilhaft herausgestellt, wenn die Gasdiffusionslage und die das Katalysatormetall umfassende mikroporöse Lage mit einer Membran zu einer Anordnung aus Gasdiffusionselektrode und Membran heißgepresst werden. Damit kann die Herstellung einer katalysatorbeschichteten Membran (CCM = englisch für "catalyst coated membrane") auf Basis von Pasten aus geträgertem Platinkatalysator entfallen. Anders als es aus dem Stand der Technik bekannt ist, ist nun die Elektrode der mikroporösen Lage und damit auch der Gasdiffusionslage zugewiesen, bevor sie mit der Membran verpresst wird.

Weitere Vorteile, Merkmale und Einzelheiten der Erfindung ergeben sich aus den Ansprüchen, der nachfolgenden Beschreibung bevorzugter Ausführungsformen sowie anhand der Zeichnung. Dabei zeigt:
- Fig. 1: eine schematische Schnittdarstellung eines ersten - nicht von der Erfindung umfassten - Schichtaufbaus einer Brennstoffzelle,
- Fig. 2: eine schematische Schnittdarstellung eines zweiten Schichtaufbaus einer Brennstoffzelle,
- Fig. 3: eine schematische Schnittdarstellung eines dritten Schichtaufbaus einer Brennstoffzelle, und
- Fig. 4: eine schematische Schnittdarstellung eines vierten Schichtaufbaus einer Brennstoffzelle.

In einer Polymerelektrolytmembranbrennstoffzelle (PEM-Brennstoffzelle) werden an einer ersten Elektrode (Anode) Brennstoff oder Brennstoffmoleküle, insbesondere Wasserstoff, in Protonen und Elektronen aufgespaltet. Die an die Anode angrenzende Membran 9 lässt die Protonen (z.B. H⁺) hindurch, ist aber undurchlässig für die Elektronen (e-). Die Membran 9 ist aus einem lonomer, vorzugsweise einem sulfonierten Tetrafluorethylen-Polymer (PTFE) oder einem Polymer der perfluorierten Sulfonsäure (PFSA) gebildet. Die Membran 9 kann alternativ auch als eine sulfonierte Hydrocarbon-Membran gebildet sein. An der Anode erfolgt dabei die folgende Reaktion: 2H₂ --> 4H⁺ + 4e⁻ (Oxidation / Elektronenabgabe). Während die Protonen durch die Membran 9 zur zweiten Elektrode (Kathode) hindurchtreten, werden die Elektronen über einen externen Stromkreis an die Kathode oder an einen Energiespeicher geleitet. An der Kathode ist ein Kathodengas, insbesondere Sauerstoff oder Sauerstoff enthaltende Luft, bereitgestellt, so dass hier die folgende Reaktion stattfindet: O₂ + 4H⁺ + 4e⁻ --> 2H₂O (Reduktion / Elektronenaufnahme).

Die vorliegende Erfindung beschäftigt sich mit der Herstellung und dem Einsatz von Gasdiffusionselektroden bei einer Brennstoffzelle.

In den Figuren sind hierzu verschiedene Schichtaufbauten 1 für eine Brennstoffzelle gezeigt, die alle ein auf Kohlenstoff basierendes katalysatorfreies Gasdiffusionslagensubstrat 2 sowie eine mit diesem Gasdiffusionslagensubstrat 2 verbundene, ebenfalls auf Kohlenstoff basierende mikroporöse Lage 3 umfassen. In die mikroporöse Lage 3 ist eine Mehrzahl von Kohlenstoffträger 4 oder Kohlenstofffasern in einem ionenleitfähigen Polymerbindergemisch eingebettet. Das Polymerbindergemisch umfasst ein schwefelfreies Bindepolymer und ein sulfoniertes Polymer, wobei ein Anteil oder eine Konzentration des Bindepolymers an oder nahe einer dem Gasdiffusionslagensubstrat 2 abgewandten Oberfläche oder Seite der mikroporösen Lage 3 kleiner gleich einem Anteil oder einer Konzentration des sulfonierten Polymers ist.

Vorliegend ist das schwefelfreie Bindepolymer Polytetrafluorethylen (PTFE), welches maßgeblich am Wassermanagement der Brennstoffzelle beteiligt ist. Das sulfonierte Polymer ist beispielsweise eine perfluorierte Sulfonsäure (PFSA) und damit für den Protonentransport verantwortlich. Letzteres verleiht dem Polymerbindergemisch seine Ionenleitfähigkeit.

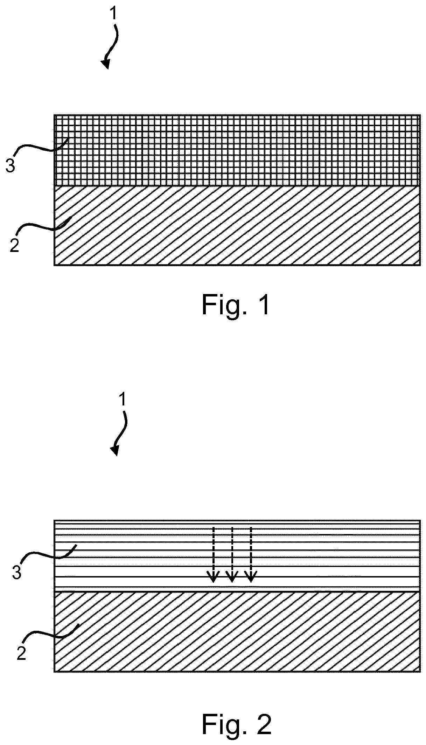

Im Beispiel des Schichtaufbaus 1 nach Figur 1 sind das PTFE und das protonenleitfähige Polymer gleichmäßig im Volumen der mikroporösen Lage 3 verteilt, was durch die karierte Darstellung veranschaulicht wird. Durch diese gleichmäßige Verteilung ist aber zugleich gewährleistet, dass der Anteil des sulfonierten Polymers an der oder nahe der dem Gasdiffusionslagensubstrat 2 abgewandten Oberfläche der mikroporösen Lage 3 nicht den Anteil des sulfonierten Polymers übersteigt, so dass eine nachfolgende Abscheidung von Atomen oder Molekülen eines Katalysatormetalls auf der mikroporösen Lage 3 durch das PTFE nicht behindert ist.

Der Schichtaufbau 1 nach Figur 2 unterscheidet sich von demjenigen aus Figur 1 dadurch, dass eine gradierte Verteilung des PTFE und des protonenleitfähigen sulfonierten Polymers innerhalb der mikroporösen Lage 3 vorliegt. Der Anteil des Bindepolymers steigt in Richtung dem Gasdiffusionslagensubstrat 2 gleichmäßig an, was durch die drei Pfeile in der Figur angedeutet wird. Komplementär dazu nimmt der Anteil des sulfonierten Polymers gleichmäßig in Richtung dem Gasdiffusionslagensubatrat 2 ab. Alternativ kann der Anteil des Bindepolymers in Richtung dem Gasdiffusionslagensubstrat 2 aber auch stufenweise ansteigen, wobei in jedem Fall gewährleistet ist, dass das Bindepolymer nicht vollständig von der dem Gasdiffusionslagensubstrat 2 abgewandten Oberfläche der mikroporösen Lage 3 verschwindet und damit immer noch am Wassermanagement nahe der Membran 9 teilnehmen kann.

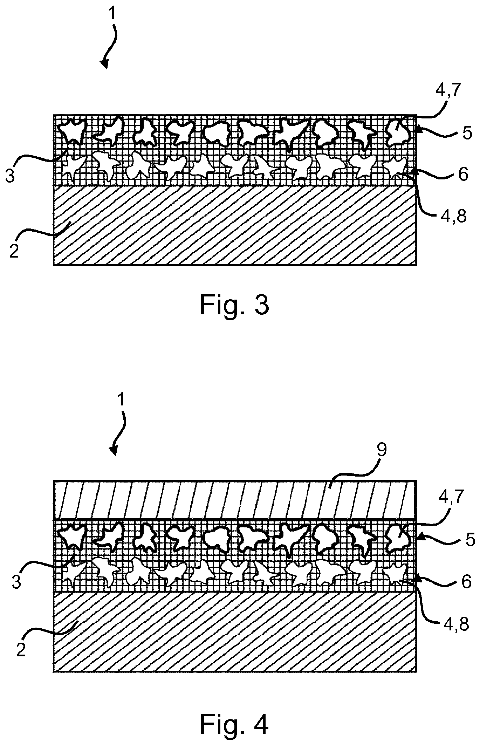

Der Schichtaufbau 1 nach Figur 3 zeigt (schematisch) die in der mikroporösen Lage 3 enthaltenen Kohlenstoffträger 4, wobei erste Kohlenstoffpartikel 7 und zweite Kohlenstoffpartikel 8 vorhanden sind. Diese können wieder in ein Polymerbindergemisch eingebettet sein, das eine gleichmäßige Verteilung aus Bindepolymer und sulfonierten Polymer innerhalb der mikroporösen Lage 3 aufweist. In einer Alternative kann aber auch ein Konzentrationsgradient der beiden Polymere in der mikroporösen Lage 3 vorliegen. Dabei besteht die Möglichkeit, die mikroporöse Lage 3 aus Schichten mit unterschiedlichen Kohlenstoff-Partikelgrößen oder -porositäten aufzubauen, um eine möglichst effektive Durchdringung bei der Beschichtung mittels Atomlagenabscheidens des Katalysators zu bewirken. So ist es z.B. möglich auf eine bestehende mikroporöse Lage 3 vor der Katalysatorbeschichtung eine oder mehrere weitere Kohlenstoffschichten aufzubringen.

Die ersten Kohlenstoffpartikel 7 befinden sich in einem ersten Volumenbereich 5, der dem Gasdiffusionslagensubstrat 2 innerhalb der mikroporösen Lage 3 abgewandt ist. Die ersten Kohlenstoffpartikel 7 können dabei funktionalisiert sein, beispielsweise mit Schwefeltrioxid (SO₃), Vinylsulfon oder Vinylphosphonsäure , so dass diese eine protonenleitenden Funktion erhalten, mithin also funktionalisiert sind. Auf diese ersten Kohlenstoffpartikel 7 kann dann mittels Atomlagenabscheidung ein Katalysatormetall abgeschieden werden, welches beispielsweise Platin ist.

Alternativ oder ergänzend können auch die sich in einem zweiten Volumenbereich 6 der mikroporösen Lage 3 angeordneten Kohlenstoffpartikel 8 funktionalisiert sein, beispielsweise durch eine Beschichtung mit einer dünnen Silikatsschicht, mit Siliziumsdioxid oder mit Titandioxid. Diese Substanzen sind hydrophil, so dass die Funktionalisierung der zweiten Kohlenstoffpartikel 8 zu einem verbesserten Wassermanagement innerhalb der mikroporösen Lage 3 führt. Durch diese Funktionalisierung der zweiten Kohlenstoffpartikel 8 lässt sich also innerhalb der Brennstoffzelle anfallendes Wasser weg von der Membran 9 und hin zum Gasdiffusionslagensubstrat 2 verteilen oder leiten.

Es sei darauf hingewiesen, dass die Funktionalisierung der vorstehend erläuterten ersten Kohlenstoffpartikel 7 und der vorstehend erläuterten zweiten Kohlenstoffpartikel 8 nur beispielhaft zu verstehen sind und andere Funktionalisierungen möglich bleiben. So kommen beispielsweise auch Funktionalisierungen infrage, die einen Einfluss auf die Porengröße innerhalb der Kohlenträger 4 haben können.

Es besteht die Möglichkeit, das die Kohlenstoffpartikel 7, 8 erst zeitlich nach ihrem Verbau oder nach ihrem Einbetten in die mikroporöse Lage 3 funktionalisiert werden. Alternativ können die Kohlenstoffpartikel 7, 8 aber auch zeitlich vor ihrem Verbau oder ihrem Einbetten in die mikroporöse Lage 3 funktionalisiert sein.

Abschließend ist in Figur 4 ein Schichtaufbau 1 gezeigt, der aus einem Gasdiffusionslagensubstrat 2, einer mikroporösen Lage 3 und einer protonenleitfähigen Membran 9 gebildet ist. Das Gasdiffusionslagensubstrat 2 entspricht dabei einem Gasdiffusionslagensubstrat 2, wie sie auch bei den Schichtaufbauten 1 nach Figuren 1 bis 3 gezeigt ist. Die mikroporöse Lage 3 ist vorliegend wie die mikroporöse Lage 3 nach Figur 3 gestaltet, wobei alternativ auch die mikroporösen Lagen 3 der Schichtaufbauten 1 nach Figur 1 oder Figur 2 Einsatz finden können.

Zeitlich bevor die Membran 9 auf die mikroporöse Lage 3 aufgebracht wurde, ist eine Katalysatorbeschichtung mittels eines Atomlagenabscheideverfahrens auf der mikroporösen Lage 3 abgeschieden worden, insbesondere unter Verwendung einer Vielzahl von Abscheidezyklen. Hierbei kommt eine Zyklenanzahl von mehr als 40 Zyklen, insbesondere von mehr als 60 Zyklen in Betracht, um zu gewährleisten, dass eine ausreichende Menge an Katalysatormetall auf der mikroporösen Lage 3 abgeschieden wurde.

Das Gasdiffusionslagensubstrat 2, die mikroporöse Lage 3 mit ihrer Katalysatormetallbeschichtung und die Membran 9 können nun gemeinsam zu einer Anordnung aus einer Gasdiffusionselektrode und einer Membran 9 heißgepresst werden, womit sie eine Einheit bilden. Dabei ist zu bemerken, dass die Katalysatorschicht vor dem Heißpressen dem Gasdiffusionslagensubstrat 2 und der mit diesem verbundenen mikroporösen Lage 3 zugewiesen ist, wobei die katalysatorfreie Membran 9 erst nachträglich zum Schichtaufbau 1 nach Figur 4 ergänzt wurde.

Die Herstellung einer mit einem Katalysator beschichteten Membran ("Catalyst Coated Membrane") auf Basis von Pasten aus geträgertem Katalysatormetall kann also mit der vorliegenden Erfindung gänzlich entfallen. Die Erfindung stellt somit einen gänzlich neuen Ansatz zur Herstellung einer Brennstoffzelle bereit.

### BEZUGSZEICHENLISTE:

- 1: Schichtaufbau
- 2: Gasdiffusionslagensubstrat
- 3: mikroporöse Lage
- 4: Kohlenstoffträger
- 5: Volumenbereich (GDL abgewandt)
- 6: Volumenbereich (GDL zugewandt)
- 7: erste Kohlenstoffpartikel
- 8: zweite Kohlenstoffpartikel
- 9: Membran

## Patentansprüche

1. Schichtaufbau (1) für eine Brennstoffzelle mit einem auf Kohlenstoff basierenden katalysatorfreien Gasdiffusionslagensubstrat (2) und mit einer mit dem Gasdiffusionslagensubstrat (2) verbundenen auf Kohlenstoff basierenden mikroporösen Lage (3), die eine Mehrzahl von in einem ionenleitfähigen Polymerbindergemisch eingebettete Kohlenstoffträger (4) oder Kohlenstofffasern umfasst, **dadurch gekennzeichnet, dass** das Polymerbindergemisch ein schwefelfreies Bindepolymer und ein sulfoniertes Polymer umfasst, und dass ein Anteil des Bindepolymers an einer dem Gasdiffusionslagensubstrat (2) abgewandten Oberfläche der mikroporösen Lage (3) kleiner als ein Anteil des sulfonierten Polymers ist, dass sich in der mikroporösen Lage (3) der Anteil des Bindepolymers in Richtung des Gasdiffusionslagensubstrats (2) erhöht, dass sich der Anteil des sulfonierten Polymers in Richtung des Gasdiffusionslagensubstrats (2) verringert, und, dass sich der Anteil des Bindepolymers in Richtung der Gasdiffusionslage (2) kontinuierlich erhöht.

2. Schichtaufbau (1) nach Anspruch 1, **dadurch gekennzeichnet, dass** die Kohlenstoffträger (4) der mikroporösen Lage (3) an einem dem Gasdiffusionslagensubstrat (2) abgewandten Volumenbereich (5) erste Kohlenstoffpartikel (7) und an einem dem Gasdiffusionslagensubstrat (2) zugewandten Volumenbereich (6) zweite Kohlenstoffpartikel (8) umfassen,
und dass die ersten und/oder die zweiten Kohlenstoffpartikel (6, 8) mit einer Beschichtung zur Funktionalisierung versehen sind.

3. Schichtaufbau (1) nach Anspruch 1 oder 2, **dadurch gekennzeichnet, dass** von der dem Gasdiffusionslagensubstrat (2) abgewandten Seite der mikroporösen Lage (3) eine Katalysatorbeschichtung aufgebracht oder in die mikroporöse Lage (3) eingebracht ist.

4. Verfahren zur Herstellung eines Schichtaufbaus (1) für eine Brennstoffzelle, umfassend die Schritte:
- Bereitstellen eines auf Kohlenstoff basierenden katalysatorfreien Gasdiffusionslagensubstrat (2),
- Einbetten einer Mehrzahl von Kohlenstoffträgern (4) oder Kohlenstofffasern in einem ionenleitfähigen Polymerbindergemisch umfassend ein schwefelfreies Bindepolymer und ein sulfoniertes Polymer,
- Bilden einer mikroporösen Lage (3), bei der ein Anteil des Bindepolymers an einer dem Gasdiffusionslagensubstrat (2) abgewandten Oberfläche der mikroporösen Lage (3) kleiner als ein Anteil des sulfonierten Polymers ist, wobei der Anteil des Bindepolymers in der mikroporösen Lage (3) in Richtung des Gasdiffusionslagensubstrats (2) erhöht wird, wobei der Anteil des sulfonierten Polymers in Richtung des Gasdiffusionslagensubstrats (2) verringert wird, und wobei der Anteil des Bindepolymers in Richtung der Gasdiffusionslage (2) kontinuierlich erhöht wird, und
- Aufbringen eines Katalysatormetalls oder einer Katalysatormetalllegierung auf die dem Gasdiffusionslagensubstrat (2) abgewandte Oberfläche oder von der dem Gasdiffusionslagensubstrat abgewandten Seite der mikroporösen Lage (3).

5. Verfahren nach Anspruch 4, **dadurch gekennzeichnet, dass** das Aufbringen des Katalysatormetalls erfolgt durch einen Zyklus oder durch mehrere Zyklen aus:
- Aufbringen einer einer Submonolage entsprechenden Menge von Atomen oder von Molekülverbindungen umfassend das Katalysatormetall auf die ein Substrat bildende mikroporöse Lage (3),
- Aufbringen eines Prekursors oder eines Passivierungsgases auf die mikroporöse Lage zur Passivierung der Atome oder der Molekülverbindungen des Katalysatormetalls, und
- Aufbringen einer weiteren einer Submonolage entsprechenden Menge an Atomen oder Molekülverbindungen umfassend das Katalysatormetall.

6. Verfahren nach Anspruch 4 oder 5, **dadurch gekennzeichnet, dass** die Kohlenstoffträger (4) als Kohlenstoffpartikel (7, 8) gebildet sind, die zeitlich vor dem Aufbringen des Katalysatormetalls funktionalisiert werden und/ oder dass eines oder mehrere der Polymere des Polymerbindergemisch zeitlich vor dem Aufbringen des Katalysatormetalls funktionalisiert werden.

7. Verfahren nach einem der Ansprüche 4 bis 6, **dadurch gekennzeichnet, dass** die Gasdiffusionslage (2) und die das Katalysatormetall umfassende mikroporöse Lage (3) mit einer Membran (9) zu einer Anordnung aus Gasdiffusionselektrode und Membran (9) heißgepresst werden.

## Claims

1. A layered structure (1) for a fuel cell having a carbon-based catalyst-free gas diffusion layer substrate (2) and having a carbon-based microporous layer (3) which is bonded to the gas diffusion layer substrate (2) and comprises a plurality of carbon carriers (4) or carbon fibers embedded in an ion-conductive polymer binder mixture, **characterized in that** the polymer binder mixture comprises a sulfur-free binder polymer and a sulfonated polymer, and **in that** a proportion of the binding polymer on a surface of the microporous layer (3) facing away from the gas diffusion layer substrate (2) is smaller than a proportion of the sulphonated polymer, **in that** the proportion of the binding polymer in the microporous layer (3) increases in the direction of the gas diffusion layer substrate (2), **in that** the proportion of the sulfonated polymer decreases in the direction of the gas diffusion layer substrate (2), and **in that** the proportion of the binding polymer increases continuously in the direction of the gas diffusion layer (2).

2. The layered structure (1) according to claim 1, **characterized in that** the carbon carries (4) of the microporous layer (3) comprise first carbon particles (7) in a volume region (5) facing away from the gas diffusion layer substrate (2) and second carbon particles (8) in a volume region (6) facing to the gas diffusion layer substrate (2), and **in that** the first and/or the second carbon particles (6,8) are provided with a coating for functionalization.

3. The layered structure (1) according to claim 1 or 2, **characterized in that** a catalyst coating is applied from the side of the microporous layer (3) facing away from the gas diffusion layer substrate (2) or is incorporated into the microporous layer (3).

4. A method of manufacturing a layered structure (1) for a fuel cell, comprising the steps of:
- providing a carbon-based catalyst-free gas diffusion layer substrate (2),
- embedding a plurality of carbon carriers (4) or carbon fibers in an ion-conductive polymer binder mixture comprising a sulfur-free binder polymer and a sulfonated polymer,
- forming a microporous layer (3) in which a proportion of the binding polymer on a surface of the microporous layer (3) facing away from the gas diffusion layer substrate (2) is smaller than a proportion of the sulfonated polymer, wherein the proportion of the binding polymer in the microporous layer (3) is increased in the direction of the gas diffusion layer substrate (2), wherein the proportion of the sulfonated polymer is reduced in the direction of the gas diffusion layer substrate (2), and wherein the proportion of the binding polymer is continuously increased in the direction of the gas diffusion layer (2), and
- applying a catalyst metal or a catalyst metal alloy to the surface facing away from the gas diffusion layer substrate (2) or from the side of the microporous layer (3) facing away from the gas diffusion layer substrate.

5. The method according to claim 4, **characterized in that** the application of the catalyst metal is carried out by one cycle or by several cycles of:
- applying an amount of atoms corresponding to a sub monolayer or of molecular compounds comprising the catalyst metal to the microporous layer (3) forming a substrate,
- applying a precursor or a passivating gas to the microporous layer to passivate the atoms or the molecular compounds of the catalyst metal, and
- applying a further amount of atoms or molecular compounds comprising the catalyst metal corresponding to a sub monolayer.

6. The method according to claim 4 or 5, **characterized in that** the carbon carriers (4) are formed as carbon particles (7, 8) which are functionalized at a time prior to the application of the catalyst metal and/ or **in that** one or more of the polymers of the polymer-binder mixture are functionalized at a time prior to the application of the catalyst metal.

7. The method according to any one of claims 4 or 6, **characterized in that** the gas diffusion layer (2) and the microporous layer (3) surrounding the catalyst metal are hot-pressed with a membrane (9) to an arrangement of gas diffusion electrode and membrane (9).

## Revendications

1. Structure en couches (1) pour une pile à combustible avec un substrat de couche de diffusion de gaz (2) sans catalyseur à base de carbone et avec une couche microporeuse (3) à base de carbone reliée au substrat de couche de diffusion de gaz (2) qui comprend une pluralité de supports de carbone (4) ou fibres de carbone intégrées dans un mélange de liant polymère conducteur d'ions, **caractérisée en ce que** le mélange de liant polymère comprend un polymère liant sans soufre et un polymère sulfoné, et **en ce qu'**une part du polymère liant d'une surface de la couche microporeuse (3) opposée au substrat de couche de diffusion de gaz (2) est inférieure à une part du polymère sulfoné, **en ce que** dans la couche microporeuse (3), la part du polymère liant augmente en direction du substrat de couche de diffusion de gaz (2), **en ce que** la part du polymère sulfoné diminue en direction du substrat de couche de diffusion de gaz (2), et **en ce que** la part du polymère liant augmente en continu en direction de la couche de diffusion de gaz (2).

2. Structure en couches (1) selon la revendication 1, **caractérisée en ce que** les supports de carbone (4) de la couche microporeuse (3) comprennent, au niveau d'une zone de volume (5) opposée du substrat de couche de diffusion de gaz (2), de premières particules de carbone (7) et au niveau de la zone de volume (6) tournée vers le substrat de couche de diffusion de gaz (2), de secondes particules de carbone (8), et **en ce que** les premières et/ou les secondes particules de carbone (6, 8) sont pourvues d'un revêtement de fonctionnalisation.

3. Structure en couches (1) selon la revendication 1 ou 2, **caractérisée en ce qu'**un revêtement de catalyseur est appliqué depuis le côté de la couche microporeuse (3) opposé au substrat de couche de diffusion de gaz (2) ou est introduit dans la couche microporeuse (3).

4. Procédé de fabrication d'une structure en couches (1) pour une pile à combustible, comprenant les étapes suivantes :
- la fourniture d'un substrat de couche de diffusion de gaz (2) sans catalyseur à base de carbone,
- l'intégration d'une pluralité de supports de carbone (4) ou fibres de carbone dans un mélange de liant polymère conducteur d'ions comprenant un polymère liant sans soufre et un polymère sulfoné,
- la formation d'une couche microporeuse (3), pour laquelle une part du polymère liant au niveau d'une surface de la couche microporeuse (3) opposée au substrat de couche de diffusion de gaz (2) est inférieure à une part du polymère sulfoné, dans lequel la part du polymère liant dans la couche microporeuse (3) est augmentée en direction du substrat de couche de diffusion de gaz (2), dans lequel la part du polymère sulfoné est diminuée en direction du substrat de couche de diffusion de gaz (2), et dans lequel la part du polymère liant est augmentée en continu en direction de la couche de diffusion de gaz (2), et
- l'application d'un métal de catalyseur ou d'un alliage de métal de catalyseur sur la surface opposée au substrat de couche de diffusion de gaz (2) ou depuis le côté opposé au substrat de couche de diffusion de gaz de la couche microporeuse (3).

5. Procédé selon la revendication 4, **caractérisé en ce que** l'application du métal de catalyseur est effectuée par un cycle ou par plusieurs cycles de :
- l'application d'une quantité correspondant à une sous-monocouche d'atomes ou de composés moléculaires comprenant le métal de catalyseur sur la couche microporeuse (3) formant un substrat,
- l'application d'un précurseur ou d'un gaz de passivation sur la couche microporeuse pour la passivation des atomes ou des composés moléculaires du métal de catalyseur, et
- l'application d'une autre quantité correspondant à une sous-monocouche d'atomes ou de composés moléculaires comprenant le métal de catalyseur.

6. Procédé selon la revendication 4 ou 5, **caractérisé en ce que** les supports de carbone (4) sont formés en tant que particules de carbone (7, 8) qui sont fonctionnalisées temporellement avant l'application du métal de catalyseur et/ou **en ce qu'**un ou plusieurs des polymères du mélange de liant polymère sont temporairement fonctionnalisés avant l'application du métal de catalyseur.

7. Procédé selon l'une quelconque des revendications 4 à 6, **caractérisé en ce que** la couche de diffusion de gaz (2) et la couche microporeuse (3) comprenant le métal de catalyseur sont pressées à chaud avec une membrane (9) en un agencement d'électrode de diffusion de gaz et de membrane (9).
